# EUROPEAN PATENT APPLICATION

(11) **EP 4 696 496 A1**
(43) Date of publication of application: **18.02.2026**
(21) Application number: 25195200.8
(22) Date of filing: 11.08.2025
(51) Int. Cl.: B32B 7/027, B32B 5/18, B32B 7/04, B32B 9/04, B32B 27/06, B32B 27/08, B32B 27/28

(54) **THERMALLY PROTECTED POLYMER COMPOSITES AND ASSOCIATED METHODS**

(30) Priority: 14.08.2024 US 202418804418
(71) Applicant: The Boeing Company, Arlington, VA 22202 (US)
(72) Inventor: O'Hara, Jeremy N., Arlington, 22202 (US); Belt, Chad D., Arlington, 22202 (US); Pantoja, Marcos, Arlington, 22202 (US); Rhodes, Charles A., Arlington, 22202 (US); Thomas, James A., Arlington, 22202 (US)
(74) Representative: Arnold & Siedsma

(57) **Abstract**

A polymer composite structure includes a polymer matrix composite material and a thermal barrier layer that is coupled to the polymer matrix composite material. The polymer composite structure is configured to resist a transient temperature spike in the polymer matrix composite material.

## Description

### FIELD

The present disclosure relates generally to composite structures and, more particularly, to polymer matrix composites with integral thermal barriers and associated methods.

### BACKGROUND

In various aerospace applications, a structure can be exposed to high temperatures during operation. Examples include an inner surface of a turbine engine exhaust duct, an outer surface of a turbine engine bypass duct, an exterior surface of a turbine fan blade, and the like. Typically, such structures are made of metal or metal alloys capable of withstanding these high operating temperatures. However, metallic structures are heavy and expensive to manufacture. High-temperature composites and ceramics have been developed as a lower weight alternative. However, high-temperature capable composites and ceramics are extremely expensive and can be difficult to process. Insulation has been offered as a less expensive solution. However, insulation is parasitic and volume intensive. Active cooling has also been offered as a solution. However, active cooling is expensive and complex. Accordingly, those skilled in the art continue with research and development efforts related to addressing these problems.

### SUMMARY

Disclosed are examples of a polymer composite structure, a method for thermally protecting a composite structure, and method for manufacturing a transient temperature spike resistant polymer composite structure. The following is a non-exhaustive list of examples, which may or may not be claimed, of the subject matter according to the present disclosure.

In an example, the disclosed polymer composite structure includes a polymer matrix composite material and a thermal barrier layer that is coupled to the polymer matrix composite material. The polymer composite structure is configured to resist a transient temperature spike in the polymer matrix composite material.

The polymer matrix composite material may form a first surface of the polymer composite structure, and the thermal barrier layer may form a second surface of the polymer composite structure, opposite the first surface. The polymer composite structure may be an exhaust duct, the polymer matrix composite material may form an outer surface of the exhaust duct, and the thermal barrier layer may form an inner surface of the exhaust duct. The thermal barrier layer may comprise at least one of a polyimide material, a polyceramic material, a silicone material, a siloxane material, an aerogel material, a ceramic matrix composite material, and a ceramic material. The thermal barrier layer may be configured to reduce a maximum temperature received by the polymer matrix composite material through the thermal barrier layer. The thermal barrier layer may be configured to reduce a heat transfer rate to the polymer matrix composite material through the thermal barrier layer. The thermal barrier layer may be configured to distribute received heat in a direction at least approximately perpendicular to normal to the thermal barrier layer. The thermal barrier layer may comprise a thermal diffusivity of less than approximately 0.0035 cm²/s. The thermal barrier layer may comprise one of a film, a coating, and a sheet. The polymer matrix composite material and the thermal barrier layer may be co-cured. The polymer matrix composite material and the thermal barrier layer may be co-bonded. The polymer matrix composite material and the thermal barrier layer may be secondarily bonded.

In an example, the disclosed thermal protection method (e.g., method for thermally protecting a polymer composite structure) includes steps of: (1) providing a polymer matrix composite material; (2) forming a thermal barrier layer on at least a portion of the polymer matrix composite material. Preferably, the method also comprises (3) resisting a transient temperature spike in the polymer matrix composite material using the thermal barrier layer.

The method may further comprise comprising resisting a transient temperature spike in the polymer matrix composite material using the thermal barrier layer, wherein forming the thermal barrier layer may comprise coupling the thermal barrier layer to the polymer matrix composite material such that the polymer matrix composite material forms a first surface of the polymer composite structure and the thermal barrier layer forms a second surface of the polymer composite structure, opposite the first surface. Resisting the transient temperature spike may comprise reducing a maximum temperature received by the polymer matrix composite material through the thermal barrier layer. Resisting the transient temperature spike may comprise reducing a heat transfer rate to the polymer matrix composite material through the thermal barrier layer. Resisting the transient temperature spike may comprise distributing received heat in a direction at least approximately perpendicular to normal to the thermal barrier layer. The thermal barrier layer may comprise at least one of a polyimide material, a polyceramic material, a silicone material, a siloxane material, an aerogel material, a ceramic matrix composite material, and a ceramic material.

In an example, the disclosed manufacturing method (e.g., method for manufacturing a polymer composite structure that is resistant to transient temperature spikes) includes steps of: (1) forming a polymer matrix composite material; (2) forming a thermal barrier layer on at least a portion of the polymer matrix composite material. Preferably the method further comprises (3) providing resistance to a transient temperature spike in the polymer matrix composite material using the thermal barrier layer.

The method may further comprise providing resistance to a transient temperature spike in the polymer matrix composite material using the thermal barrier layer, wherein forming the thermal barrier layer may comprise coupling the thermal barrier layer to the polymer matrix composite material such that the polymer matrix composite material forms a first surface of the polymer composite structure and the thermal barrier layer forms a second surface of the polymer composite structure, opposite the first surface.

Other examples of the polymer composite structure and methods will become apparent from the following detailed description, the accompanying drawings, and the appended claims.

### BRIEF DESCRIPTION OF THE DRAWINGS

Fig. 1 is a schematic block diagram of an example of a polymer composite structure;
Fig. 2 is a flow diagram of an example of a method for thermally protecting a polymer composite structure;
Fig. 3 is a flow diagram of an example of a method for manufacturing a transient temperature spike resistant polymer composite structure;
Fig. 4 is a schematic illustration of an example of the polymer composite structure;
Fig. 5 is a schematic, sectional view of an example of a portion of the polymer composite structure of Fig. 4;
Fig. 6 is a flow diagram of an example of an aircraft manufacturing and service method; and
Fig. 7 is a schematic block diagram of an example of an aircraft.

### DETAILED DESCRIPTION

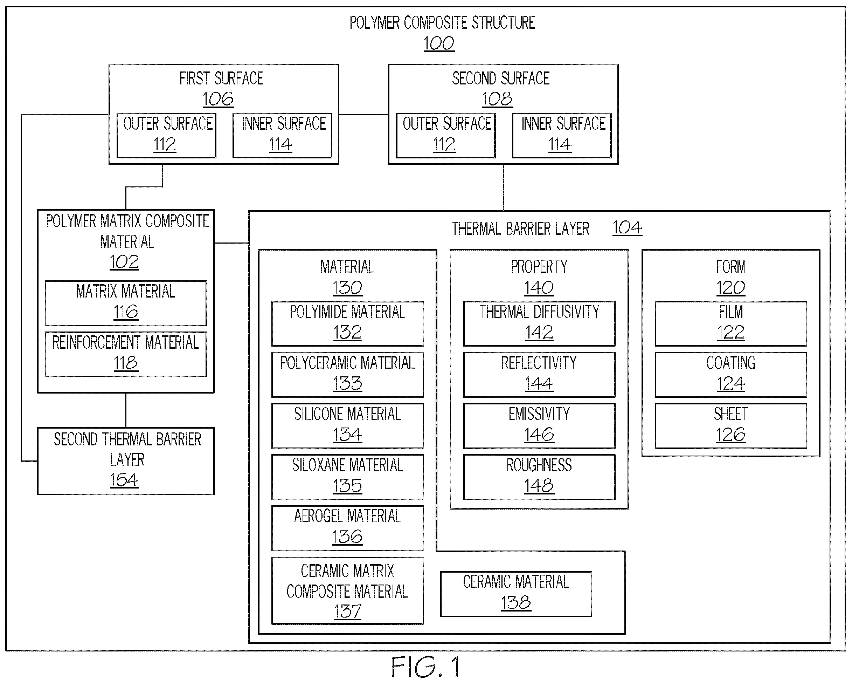

Referring generally to Figs. 1-5, by way of examples, the present disclosure is directed to a polymer composite structure 100, a method 1000 for thermally protecting the polymer composite structure 100, and a method 2000 for manufacturing the polymer composite structure 100 that is resistant to a transient temperature spike. Generally, examples of the polymer composite structure 100 can be used across various industries such as aerospace, automotive, marine, civil engineering, industrial processing machinery, and the like due to its superior mechanical and thermal properties, including high strength-to-weight ratio, enhanced stiffness, improved durability, thermal stability, resistance to environmental degradation, and resistance to transient temperature spikes.

Examples of the disclosed polymer composite structure 100 include the application or inclusion of a thermal barrier to at least one side (e.g., a flow side) of a polymer matrix composite (PMC) structure, such as an exhaust duct or other structure that encounters high temperature spikes during use. The thermal barrier is configured to limit the peak temperature experienced by the PMC structure to an acceptable range. As such, examples of the polymer composite structure 100, disclosed herein, enables application of a PMC material beyond its typical useful environment.

Referring to Fig. 1, in one or more examples, the polymer matrix composite (PMC) material 102 includes any suitable materials made of polymer matrices, referred to herein as matrix material 116, that bind together discontinuous (e.g., short or long) or continuous fibers, referred to herein as reinforcement material 118. The polymer matrix composite material 102 can include or utilize any suitable type (e.g., composition) of matrix material 116 and reinforcement material 118.

In one or more examples, the matrix material 116 is a carbon or graphite matrix (e.g., carbon matrix composite). In one or more examples, the matrix material 116 is bismaleimide (BMI) resin (e.g., BMI fiber composite). In other examples, the matrix material 116 includes epoxy, polyetherketoneketone (PEKK), polyether ether ketone (PEEK), polyimide (PI), polyphenylene sulfide (PPS), and similar materials or combination thereof. In various examples, the matrix material 116 is characterized by a low viscosity, enabling efficient impregnation of the reinforcement material 118 and its high cross-linking density, which provides superior thermal and chemical resistance.

In one or more examples, the reinforcement material 118 includes reinforcing fibers, such as any suitable PMC fiber, including, but not limited to, quartz, glass, aramid, carbon, and the like. The reinforcement material 118 can include discontinuous (e.g., long and/or short) fibers, continuous fibers, or a combination thereof. The fibers of the reinforcement material 118 can be aligned in a unidirectional, bidirectional, or multidirectional configuration and can be optimized the load-bearing capacity. The fiber architecture of the reinforcement material 118 can include a weave pattern that includes a combination of warp and weft fibers, which includes unidirectional tape and/or non-crimp fabrics, and/or that enhances in-plane and out-of-plane mechanical properties of the polymer composite structure 100. In various examples, the fiber architecture of the reinforcement material 118 prevents delamination and improves impact resistance.

The polymer composite structure 100 is fabricated using any suitable composite manufacturing process, such as automated fiber placement (AFP), resin transfer molding (RTM), vacuum-assisted resin infusion (VARI), pre-impregnated ("prepreg") hand layup, and the like. Such processes ensure control over fiber alignment, resin distribution, and curing parameters, resulting in a high-quality composite with minimal defects. In various examples, the polymer composite structure 100 is manufactured by forming a composite layup including multiple layers of the reinforcement material 118 embedded in the matrix material 116.

Referring now to Figs. 1, 4 and 5, the following are examples of the polymer composite structure 100, according to the present disclosure. The polymer composite structure 100 includes a number of elements, features, and components. Not all of the elements, features, and/or components described or illustrated in one example are required in that example. Some or all of the elements, features, and/or components described or illustrated in one example can be combined with other examples in various ways without the need to include other elements, features, and/or components described in those other examples, even though such combination or combinations are not explicitly described or illustrated by example herein.

In one or more examples, the polymer composite structure 100 includes a polymer matrix composite material 102 and a thermal barrier layer 104. The thermal barrier layer 104 is coupled to or otherwise disposed on at least a portion of (e.g., at least one surface of) the polymer matrix composite material 102. The thermal barrier layer 104 is configured to resist a transient temperature spike in the polymer matrix composite material 102. In one or more examples, the thermal barrier layer 104 is configured to diffuse temporary high temperatures (e.g., a thermal diffusion layer).

For the purpose of the present disclosure, a transient temperature spike refers to a rapid and/or temporary increase in temperature that occurs over a relatively short period of time. Example characteristics of a transient temperature spike include rapid onset in which the temperature increase happens quickly, often within seconds or minutes, short duration in which the elevated temperature does not last long and typically returns to baseline levels relatively quickly, and/or high magnitude in which the spike can be significantly higher than the normal operating or ambient temperatures experienced by the structure or system. Impacts of transient temperature spikes include thermal stress in which the material experiences thermal expansion and contraction that can lead to mechanical stress and potential failure and/or reduced lifespan in which repeated exposure to transient temperature spikes can degrade the material and shorten its operational lifespan.

In one or more examples, the polymer matrix composite material 102 forms a first surface 106 of the polymer composite structure 100. The thermal barrier layer 104 forms a second surface 108 of the polymer composite structure 100, which is opposite the first surface 106. In these examples, the thermal barrier layer 104 is situated on one surface of the polymer matrix composite material 102 and, thus, forms one surface of the polymer composite structure 100. However, in other examples, the thermal barrier layer 104 is situated on more than one surface of the polymer matrix composite material 102 and, thus, forms more than one surface of the polymer composite structure 100.

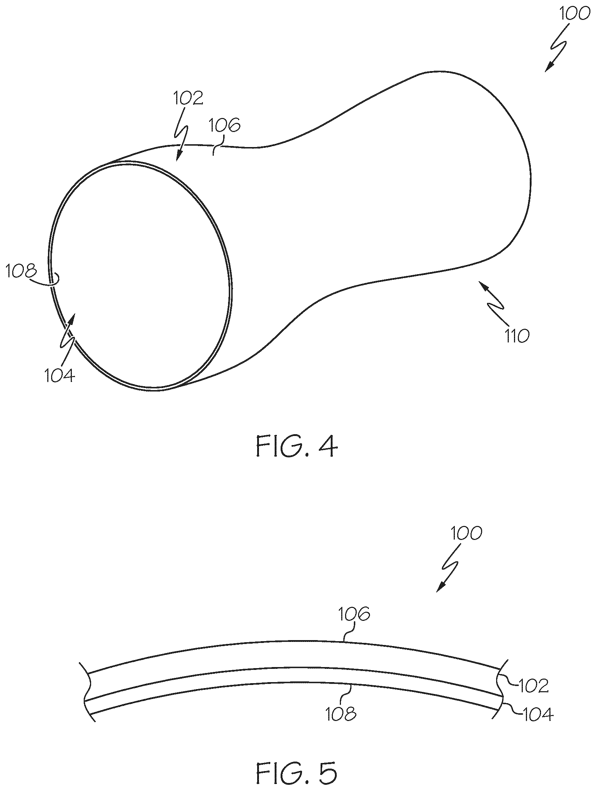

As illustrated in Fig. 4, in one or more examples, the polymer composite structure 100 is an exhaust duct 110. In these examples, the polymer matrix composite material 102 forms an outer surface 112 of the exhaust duct 110. The thermal barrier layer 104 forms an inner surface 114 of the exhaust duct 110. In these examples, the inner surface 114 of the exhaust duct 110 experiences a high temperature internal flow environment. The outer surface 112 experiences a cooler external environment.

In other examples, the polymer composite structure 100 can be utilized in any application in which a structure or component experiences a temperature gradient between two opposing surfaces, such as an interior surface and an exterior surface or in which the structure or component includes a flow surface that experiences a temperature gradient between two opposing surfaces, such as an inside surface and an outside surface. Examples include, but are not limited to, inlet ducts, bypass ducts, process flow ducts, rotor blades, high-speed wings, and the like.

Referring to Fig. 1, the thermal barrier layer 104 includes or is made of any suitable type of material 130. In one or more examples, the thermal barrier layer 104 includes a polyimide material 132. In one or more examples, the thermal barrier layer 104 includes a polyceramic material 133. In one or more examples, the thermal barrier layer 104 includes a silicone material 134. In one or more examples, the thermal barrier layer 104 includes a siloxane material 135. In one or more examples, the thermal barrier layer 104 includes an aerogel material 136. In one or more examples, the thermal barrier layer 104 includes a ceramic matrix composite material 137. In one or more examples, the thermal barrier layer 104 includes a ceramic material 138. In one or more examples, the thermal barrier layer 104 includes at least one of or a combination of the polyimide material 132, the polyceramic material 133, the silicone material 134, the siloxane material 135, the aerogel material 136, the ceramic matrix composite material 137, and the ceramic material 138. Other suitable materials are also contemplated for use as the thermal barrier layer 104.

In various examples, the thermal barrier layer 104 is configured for resisting the transient temperature spike experienced by the polymer matrix composite material 102. The thermal barrier layer 104 can achieve this advantageous benefit in a number of ways. In one or more examples, the thermal barrier layer 104 is configured to reduce a maximum temperature received by the polymer matrix composite material 102 through the thermal barrier layer 104. In one or more examples, the thermal barrier layer 104 is configured to reduce a heat transfer rate to the polymer matrix composite material 102 through the thermal barrier layer 104. In one or more examples, the thermal barrier layer 104 is configured to distribute or diffuse heat received by the polymer composite structure 100 in a direction at least approximately perpendicular to normal to thermal barrier layer 104, such as, distribute heat received by the second surface 108 in a direction at least approximately perpendicular to normal to the second surface 108.

Referring to Fig. 1., the thermal barrier layer 104 (e.g., material 130) has at least one instance of a property 140 that is selected to achieve the desired resistance to transient temperature spikes. In one or more examples, the property 140 is thermal diffusivity 142. In one or more examples, the thermal barrier layer 104 includes the thermal diffusivity 142 of less than approximately 0.0035 cm²/s. In one or more examples, the thermal barrier layer 104 includes the thermal diffusivity 142 of less than approximately 0.0025 cm²/s. In one or more examples, the thermal barrier layer 104 includes a thermal diffusivity 142 of less than approximately 0.0015 cm²/s.

In other examples, the property 140 can be any one of various other material properties or characteristics that enhance the ability of the thermal barrier layer 104 to resist transient temperature spikes, including, but not limited to, reflectivity 144, emissivity 146, surface roughness 148, and the like.

Referring to Fig. 1, the thermal barrier layer 104 includes a form 120 that is selected for application on or coupling to a surface of the polymer matrix composite material 102. In one or more examples, the thermal barrier layer 104 includes or takes the form of a film 122. In one or more examples, the thermal barrier layer 104 includes or takes the form of a coating 124. In one or more examples, the thermal barrier layer 104 includes or takes the form of a sheet 126.

The thermal barrier layer 104 can be formed on, coupled to, applied to, or otherwise integrated with the polymer matrix composite material 102 in any suitable one of various techniques. In one or more examples, the polymer matrix composite material 102 and the thermal barrier layer 104 are co-cured. In one or more examples, the polymer matrix composite material 102 and the thermal barrier layer 104 are co-bonded. In one or more examples, the polymer matrix composite material 102 and the thermal barrier layer 104 are secondarily bonded.

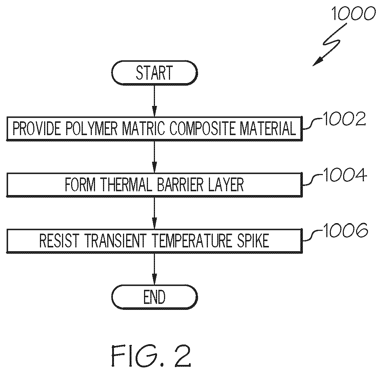

Referring now to Fig. 1 and 2, the following are examples of the method 1000 for thermally protecting a polymer composite structure 100, according to the present disclosure. The method 1000 includes a number of elements, steps, operations, or processes. Not all of the elements, steps, operations, or processes described or illustrated in one example are required in that example. Some or all of the elements, steps, operations, or processes described or illustrated in one example can be combined with other examples in various ways without the need to include other elements, steps, operations, or processes described in those other examples, even though such combination or combinations are not explicitly described or illustrated by example herein.

In one or more examples, the method 1000 includes a step of providing 1002 the polymer matrix composite material 102. The method 1000 includes a step of forming 1004 the thermal barrier layer 104 on at least a portion of the polymer matrix composite material 102. The method 1000 includes a step of resisting 1006 a transient temperature spike in the polymer matrix composite material 102 using the thermal barrier layer 104.

In one or more examples, according to the method 1000, the step of resisting 1006 the transient temperature spike includes a step of reducing a maximum temperature received by the polymer matrix composite material 102 through the thermal barrier layer 104.

In one or more examples, according to the method 1000, the step of resisting 1006 the transient temperature spike includes a step of reducing a heat transfer rate to the polymer matrix composite material 102 through the thermal barrier layer 104.

In one or more examples, according to the method 1000, the step of resisting 1006 the transient temperature spike includes a step of distributing received heat in a direction at least approximately perpendicular to normal to thermal barrier layer 104, such as, distributing heat received by the second surface 108 in a direction at least approximately perpendicular to normal to the second surface 108.

In one or more examples, according to the method 1000, the step of forming 1004 the thermal barrier layer 104 includes a step of coupling the thermal barrier layer 104 to the polymer matrix composite material 102 such that the polymer matrix composite material 102 forms the first surface 106 of the polymer composite structure 100 and the thermal barrier layer 104 forms the second surface 108 of the polymer composite structure 100, which is opposite the first surface 106. In other examples, the step of forming 1004 the thermal barrier layer 104 includes a step of coupling the thermal barrier layer 104 to the polymer matrix composite material 102 such that the thermal barrier layer 104 forms the first surface 106 and the second thermal barrier layer 154 forms the second surface 108 of the polymer composite structure 100 and the polymer matrix composite material 102 is disposed between the thermal barrier layer 104 and the second thermal barrier layer 154.

In one or more examples, according to the method 1000, the step of forming 1004 the thermal barrier layer 104 includes a step of co-curing the polymer matrix composite material 102 and the thermal barrier layer 104.

In one or more examples, according to the method 1000, the step of forming 1004 the thermal barrier layer 104 includes a step of co-bonding the polymer matrix composite material 102 and the thermal barrier layer 104.

In one or more examples, according to the method 1000, the step of forming 1004 the thermal barrier layer 104 includes a step of secondarily bonding the polymer matrix composite material 102 and the thermal barrier layer 104.

In one or more examples, the method 1000 includes a step of selecting the thermal barrier layer 104 to include at least one of the polyimide material 132, the polyceramic material 133, the silicone material 134, the siloxane material 135, the aerogel material 136, the ceramic matrix composite material 137, and the ceramic material 138.

In one or more examples, the method 1000 includes a step of selecting the thermal barrier layer 104 comprising the thermal diffusivity 142 of less than approximately 0.0035 cm²/s. In one or more examples, the method 1000 includes a step of selecting the thermal barrier layer 104 comprising the thermal diffusivity 142 of less than approximately 0.0025 cm²/s. In one or more examples, the method 1000 includes a step of selecting the thermal barrier layer 104 comprising the thermal diffusivity 142 of less than approximately 0.0015 cm²/s.

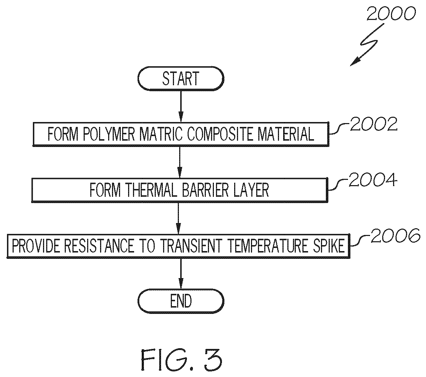

Referring now to Fig. 1 and 3, the following are examples of the method 2000 for manufacturing a polymer composite structure 100 that is resistant to transient temperature spikes, according to the present disclosure. The method 2000 includes a number of elements, steps, operations, or processes. Not all of the elements, steps, operations, or processes described or illustrated in one example are required in that example. Some or all of the elements, steps, operations, or processes described or illustrated in one example can be combined with other examples in various ways without the need to include other elements, steps, operations, or processes described in those other examples, even though such combination or combinations are not explicitly described or illustrated by example herein.

In one or more examples, the method 2000 includes a step of forming 2002 the polymer matrix composite material 102. The method 2000 includes a step of forming 2004 the thermal barrier layer 104 on at least a portion of the polymer matrix composite material 102. The method 1000 includes a step of providing 2006 resistance to a transient temperature spike in the polymer matrix composite material 102 using the thermal barrier layer 104.

In one or more examples, according to the method 2000, the step of providing 2006 resistance to the transient temperature spike includes a step of reducing a maximum temperature received by the polymer matrix composite material 102 through the thermal barrier layer 104.

In one or more examples, according to the method 2000, the step of providing 2006 resistance to the transient temperature spike includes a step of reducing a heat transfer rate to the polymer matrix composite material 102 through the thermal barrier layer 104.

In one or more examples, according to the method 2000, the step of providing 2006 resistance to the transient temperature spike includes a step of distribute received heat in a direction at least approximately perpendicular to normal to thermal barrier layer 104, such as, distributing heat received by the second surface 108 in a direction at least approximately perpendicular to normal to the second surface 108.

In one or more examples, according to the method 2000, the step of forming 2004 the thermal barrier layer 104 includes a step of coupling the thermal barrier layer 104 to the polymer matrix composite material 102 such that the polymer matrix composite material 102 forms the first surface 106 of the polymer composite structure 100 and the thermal barrier layer 104 forms the second surface 108 of the polymer composite structure 100, which opposite the first surface 106. In other examples, the step of forming 1004 the thermal barrier layer 104 includes a step of coupling the thermal barrier layer 104 to the polymer matrix composite material 102 such that the thermal barrier layer 104 forms the first surface 106 and the second thermal barrier layer 154 forms the second surface 108 of the polymer composite structure 100 and the polymer matrix composite material 102 is disposed between the thermal barrier layer 104 and the second thermal barrier layer 154.

In one or more examples, according to the method 2000, the step of forming 2004 the thermal barrier layer 104 includes a step of co-curing the polymer matrix composite material 102 and the thermal barrier layer 104.

In one or more examples, according to the method 2000, the step of forming 2004 the thermal barrier layer 104 includes a step of co-bonding the polymer matrix composite material 102 and the thermal barrier layer 104.

In one or more examples, according to the method 2004, the step of forming 2004 the thermal barrier layer 104 includes a step of secondarily bonding the polymer matrix composite material 102 and the thermal barrier layer 104.

In one or more examples, the method 2000 includes a step of selecting the thermal barrier layer 104 to include at least one of the polyimide material 132, the polyceramic material 133, the silicone material 134, the siloxane material 135, the aerogel material 136, the ceramic matrix composite material 137, and the ceramic material 138.

In one or more examples, the method 2000 includes a step of selecting the thermal barrier layer 104 comprising the thermal diffusivity 142 of less than approximately 0.0035 cm²/s. In one or more examples, the method 2000 includes a step of selecting the thermal barrier layer 104 comprising the thermal diffusivity 142 of less than approximately 0.0025 cm²/s. In one or more examples, the method 2000 includes a step of selecting the thermal barrier layer 104 comprising the thermal diffusivity 142 of less than approximately 0.0015 cm²/s.

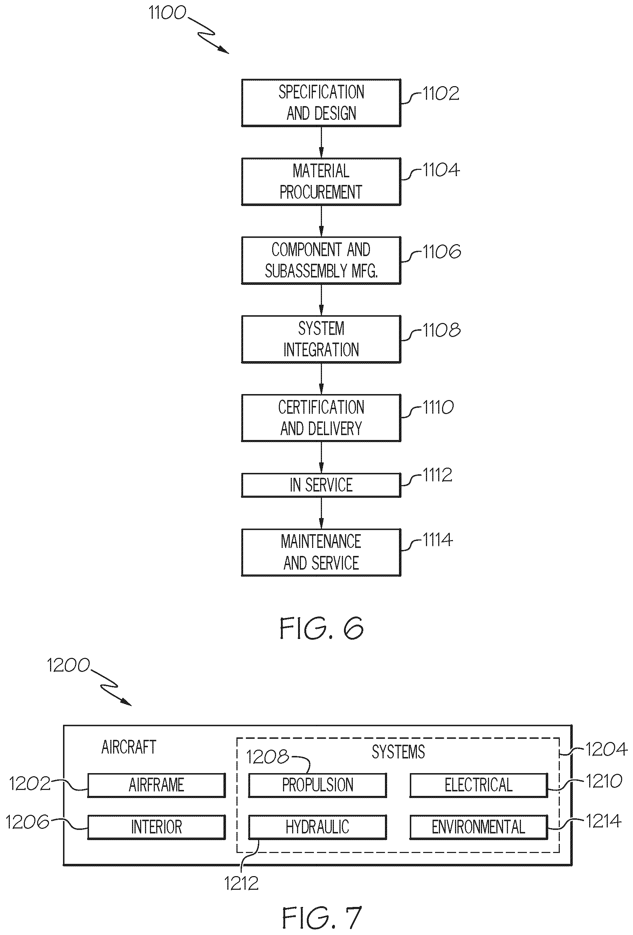

Referring now to Figs. 6 and 7, examples of the polymer composite structure 100, the method 1000, and/or the method 2000, described herein, may be related to, or used in the context of, the aerospace manufacturing and service method 1100, as shown in the flow diagram of Fig. 6, and an aircraft 1200, as schematically illustrated in Fig. 7. As an example, the aircraft 1200 and/or the manufacturing and service method 1100 may include examples of the polymer composite structure 100, thermally protect the polymer composite structure 100 according to the method 1000, and/or manufacture the polymer composite structure 100 according to the method 2000.

Referring to Fig. 7, which illustrates an example of the aircraft 1200. The aircraft 1200 can be any aerospace vehicle or platform. In one or more examples, the aircraft 1200 includes the airframe 1202 having the interior 1206. The aircraft 1200 includes a plurality of onboard systems 1204 (e.g., high-level systems). Examples of the onboard systems 1204 of the aircraft 1200 include propulsion systems 1208, hydraulic systems 1212, electrical systems 1210, and environmental systems 1214. In other examples, the onboard systems 1204 also includes one or more control systems coupled to the airframe 1202 of the aircraft 1200. In yet other examples, the onboard systems 1204 also include one or more other systems, such as, but not limited to, communications systems, avionics systems, software distribution systems, network communications systems, passenger information/entertainment systems, guidance systems, radar systems, weapons systems, and the like. The aircraft 1200 can have any number of transient temperature spike resistant polymer composite structures (e.g., polymer composite structure 100) protected according to the method 1000 and/or manufactured according to the method 2000.

Referring to Fig. 6, during pre-production of the aircraft 1200, the manufacturing and service method 1100 includes specification and design 1102 of the aircraft 1200 and material procurement 1104. During production of the aircraft 1200, component and subassembly manufacturing 1106 and system integration 1108 of the aircraft 1200 take place. Thereafter, the aircraft 1200 goes through certification and delivery 1110 to be placed in service 1112. Routine maintenance and service 1114 includes modification, reconfiguration, refurbishment, etc. of one or more systems of the aircraft 1200.

Each of the processes of the manufacturing and service method 1100 illustrated in Fig. 6 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

Examples of the polymer composite structure 100, the method 1000, and/or the method 2000, shown and described herein, may be employed during any one or more of the stages of the manufacturing and service method 1100 shown in the flow diagram illustrated by Fig. 6. In an example, one or more instances of the polymer composite structure 100 of the aircraft 1200 can be thermally protected according to the method 1000 and/or manufactured according to the method 2000 during a portion of component and subassembly manufacturing 1106 and/or system integration 1108. Further, one or more instances of the polymer composite structure 100 of the aircraft 1200 can be thermally protected according to the method 1000 and/or manufactured according to the method 2000 while the aircraft 1200 is in service 1112. Also, one or more instances of the polymer composite structure 100 of the aircraft 1200 can be thermally protected according to the method 1000 and/or manufactured according to the method 2000 during system integration 1108 and certification and delivery 1110. Similarly, one or more instances of the polymer composite structure 100 of the aircraft 1200 can be thermally protected according to the method 1000 and/or manufactured according to the method 2000 while the aircraft 1200 is in service 1112 and during maintenance and service 1114.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1, 4, 5 and 7, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1, 4, 5 and 7, referred to above, need be included in every example and not all elements, features, and/or components described herein are necessarily depicted in each illustrative example. Accordingly, some of the elements, features, and/or components described and illustrated in Figs. 1, 4, 5 and 7 may be combined in various ways without the need to include other features described and illustrated in Figs. 1, 4, 5 and 7, other drawing figures, and/or the accompanying disclosure, even though such combination or combinations are not explicitly illustrated herein. Similarly, additional features not limited to the examples presented, may be combined with some or all of the features shown and described herein. Unless otherwise explicitly stated, the schematic illustrations of the examples depicted in Figs. 1, 4, 5 and 7, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1, 4, 5 and 7, and such elements, features, and/or components may not be discussed in detail herein with reference to each of Figs. 1, 4, 5 and 7. Similarly, all elements, features, and/or components may not be labeled in each of Figs. 1, 4, 5 and 7, but reference numerals associated therewith may be utilized herein for consistency.

In Figs. 2, 3 and 6, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 2, 3 and 6 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the polymer composite structure 100, the method 1000, and the method 2000 have been shown and described, modifications may occur to those skilled in the art upon reading the specification. The present application includes such modifications and is limited only by the scope of the claims.

The disclosure also comprises the following clauses:
1. A polymer composite structure (100) comprising:
   a polymer matrix composite material (102); and
   a thermal barrier layer (104) coupled to the polymer matrix composite material (102) and configured to resist a transient temperature spike in the polymer matrix composite material (102).
2. The polymer composite structure (100) of Clause 1, wherein:
   the polymer matrix composite material (102) forms a first surface (106) of the polymer composite structure (100); and
   the thermal barrier layer (104) forms a second surface (108) of the polymer composite structure (100), opposite the first surface (106).
3. The polymer composite structure (100) of Clause 1 or 2, wherein:
   the polymer composite structure (100) is an exhaust duct (110);
   the polymer matrix composite material (102) forms an outer surface (112) of the exhaust duct (110); and
   the thermal barrier layer (104) forms an inner surface (114) of the exhaust duct (110).
4. The polymer composite structure (100) of any one of Clauses 1-3, wherein the thermal barrier layer (104) comprises at least one of a polyimide material (132), a polyceramic material (133), a silicone material (134), a siloxane material (135), an aerogel material (136), a ceramic matrix composite material (137), and a ceramic material (138).
5. The polymer composite structure (100) of any one of Clauses 1-4, wherein the thermal barrier layer (104) is configured to reduce a maximum temperature received by the polymer matrix composite material (102) through the thermal barrier layer (104).
6. The polymer composite structure (100) of any one of Clauses 1-5, wherein the thermal barrier layer (104) is configured to reduce a heat transfer rate to the polymer matrix composite material (102) through the thermal barrier layer (104).
7. The polymer composite structure (100) of any one of Clauses 1-6, wherein the thermal barrier layer (104) is configured to distribute received heat in a direction at least approximately perpendicular to normal to the thermal barrier layer (104).
8. The polymer composite structure (100) of any one of Clauses 1-7, wherein the thermal barrier layer (104) comprises a thermal diffusivity (142) of less than approximately 0.0035 cm²/s.
9. The polymer composite structure (100) of any one of Clauses 1-8, wherein the thermal barrier layer (104) comprises one of a film (122), a coating (124), and a sheet (126).
10. The polymer composite structure (100) of any one of Clauses 1-9, wherein the polymer matrix composite material (102) and the thermal barrier layer (104) are co-cured.
11. The polymer composite structure (100) of any one of Clauses 1-10, wherein the polymer matrix composite material (102) and the thermal barrier layer (104) are co-bonded.
12. The polymer composite structure (100) of any one of Clauses 1-11, wherein the polymer matrix composite material (102) and the thermal barrier layer (104) are secondarily bonded.
13. A method (1000) for thermally protecting a polymer composite structure (100), the method (1000) comprising:
   providing a polymer matrix composite material (102); and
   forming a thermal barrier layer (104) on at least a portion of the polymer matrix composite material (102).
14. The method (1000) of Clause 13, further comprising resisting a transient temperature spike in the polymer matrix composite material (102) using the thermal barrier layer (104),
   wherein forming the thermal barrier layer (104) comprises coupling the thermal barrier layer (104) to the polymer matrix composite material (102) such that the polymer matrix composite material (102) forms a first surface (106) of the polymer composite structure (100) and the thermal barrier layer (104) forms a second surface (108) of the polymer composite structure (100), opposite the first surface (106).
15. The method (1000) of Clause 13 or 14, wherein resisting the transient temperature spike comprises reducing a maximum temperature received by the polymer matrix composite material (102) through the thermal barrier layer (104).
16. The method (1000) of any one of Clauses 13-15, wherein resisting the transient temperature spike comprises reducing a heat transfer rate to the polymer matrix composite material (102) through the thermal barrier layer (104).
17. The method (1000) of any one of Clauses 13-16, wherein resisting the transient temperature spike comprises distributing received heat in a direction at least approximately perpendicular to normal to the thermal barrier layer (104).
18. The method (1000) of any one of Clauses 13-17, wherein the thermal barrier layer (104) comprises at least one of a polyimide material (132), a polyceramic material (133), a silicone material (134), a siloxane material (135), an aerogel material (136), a ceramic matrix composite material (137), and a ceramic material (138).
19. A method (2000) for manufacturing a polymer composite structure (100) that is resistant to transient temperature spikes, the method (2000) comprising:
   forming a polymer matrix composite material (102); and
   forming a thermal barrier layer (104) on at least a portion of the polymer matrix composite material (102).
20. The method (2000) of Clause 19, further comprising providing resistance to a transient temperature spike in the polymer matrix composite material (102) using the thermal barrier layer (104),
   wherein forming the thermal barrier layer (104) comprises coupling the thermal barrier layer (104) to the polymer matrix composite material (102) such that the polymer matrix composite material (102) forms a first surface (106) of the polymer composite structure (100) and the thermal barrier layer (104) forms a second surface (108) of the polymer composite structure (100), opposite the first surface (106).

## Claims

1. A polymer composite structure (100) comprising:
a polymer matrix composite material (102); and
a thermal barrier layer (104) coupled to the polymer matrix composite material (102) and configured to resist a transient temperature spike in the polymer matrix composite material (102).

2. The polymer composite structure (100) of Claim 1, wherein:
the polymer matrix composite material (102) forms a first surface (106) of the polymer composite structure (100); and
the thermal barrier layer (104) forms a second surface (108) of the polymer composite structure (100), opposite the first surface (106).

3. The polymer composite structure (100) of Claim 1 or 2, wherein:
the polymer composite structure (100) is an exhaust duct (110);
the polymer matrix composite material (102) forms an outer surface (112) of the exhaust duct (110); and
the thermal barrier layer (104) forms an inner surface (114) of the exhaust duct (110).

4. The polymer composite structure (100) of any one of Claims 1-3, wherein the thermal barrier layer (104) comprises at least one of a polyimide material (132), a polyceramic material (133), a silicone material (134), a siloxane material (135), an aerogel material (136), a ceramic matrix composite material (137), and a ceramic material (138).

5. The polymer composite structure (100) of any one of Claims 1-4, wherein the thermal barrier layer (104) is configured to reduce a maximum temperature received by the polymer matrix composite material (102) through the thermal barrier layer (104).

6. The polymer composite structure (100) of any one of Claims 1-5, wherein the thermal barrier layer (104) is configured to reduce a heat transfer rate to the polymer matrix composite material (102) through the thermal barrier layer (104).

7. The polymer composite structure (100) of any one of Claims 1-6, wherein the thermal barrier layer (104) is configured to distribute received heat in a direction at least approximately perpendicular to normal to the thermal barrier layer (104).

8. The polymer composite structure (100) of any one of Claims 1-7, wherein the thermal barrier layer (104) comprises:
a thermal diffusivity (142) of less than approximately 0.0035 cm²/s; and/or
one of a film (122), a coating (124), and a sheet (126).

9. The polymer composite structure (100) of any one of Claims 1-8, wherein the polymer matrix composite material (102) and the thermal barrier layer (104) are co-cured, co-bonded, and/or secondarily bonded.

10. A method (1000) for thermally protecting a polymer composite structure (100), the method (1000) comprising:
providing a polymer matrix composite material (102); and
forming a thermal barrier layer (104) on at least a portion of the polymer matrix composite material (102).

11. The method (1000) of Claim 10, further comprising resisting a transient temperature spike in the polymer matrix composite material (102) using the thermal barrier layer (104),
wherein forming the thermal barrier layer (104) comprises coupling the thermal barrier layer (104) to the polymer matrix composite material (102) such that the polymer matrix composite material (102) forms a first surface (106) of the polymer composite structure (100) and the thermal barrier layer (104) forms a second surface (108) of the polymer composite structure (100), opposite the first surface (106).

12. The method (1000) of Claim 10 or 11, wherein resisting the transient temperature spike comprises:
reducing a maximum temperature received by the polymer matrix composite material (102) through the thermal barrier layer (104); and/or
reducing a heat transfer rate to the polymer matrix composite material (102) through the thermal barrier layer (104); and/or
distributing received heat in a direction at least approximately perpendicular to normal to the thermal barrier layer (104).

13. The method (1000) of any one of Claims 10-12, wherein the thermal barrier layer (104) comprises at least one of a polyimide material (132), a polyceramic material (133), a silicone material (134), a siloxane material (135), an aerogel material (136), a ceramic matrix composite material (137), and a ceramic material (138).

14. A method (2000) for manufacturing a polymer composite structure (100) that is resistant to transient temperature spikes, the method (2000) comprising:
forming a polymer matrix composite material (102); and
forming a thermal barrier layer (104) on at least a portion of the polymer matrix composite material (102).

15. The method (2000) of Claim 14, further comprising providing resistance to a transient temperature spike in the polymer matrix composite material (102) using the thermal barrier layer (104),
wherein forming the thermal barrier layer (104) comprises coupling the thermal barrier layer (104) to the polymer matrix composite material (102) such that the polymer matrix composite material (102) forms a first surface (106) of the polymer composite structure (100) and the thermal barrier layer (104) forms a second surface (108) of the polymer composite structure (100), opposite the first surface (106).
